# FASCICULE DE BREVET EUROPEEN

(11) **EP 1 744 427 B1**
(45) Date de publication et mention de la délivrance du brevet: **23.07.2008**
(21) Numéro de dépôt: 06291116.9
(22) Date de dépôt: 06.07.2006
(51) Int. Cl.: H02G 3/18

(54) **Coffret pour appareillages électriques à profondeur variable**
Gehäuse eines elektrischen Gerätes mit verstellbarer Tiefe
Cabinet for electrical apparatus with adjustable depth

(30) Priorité: 12.07.2005 FR 0507446
(43) Date de publication de la demande: 17.01.2007
(73) Titulaire: LEGRAND FRANCE, 87000 Limoges (FR); LEGRAND SNC, 87000 Limoges (FR)
(72) Inventeur: Araujo, Fernando, 87350 Panazol (FR); Auvray, Christophe, 87240 Saint Sylvestre (FR)
(74) Mandataire: Orsini, Fabienne

(56) Documents cités:
- EP-A- 1 061 621
- EP-A- 1 416 600
- FR-A- 2 088 897
- GB-A- 2 257 847
- US-A- 4 634 015
- US-A- 5 967 354
- US-B1- 6 369 322

## Description

La présente invention concerne de manière générale les coffrets pour appareillages électriques tels que, dans le domaine tertiaire, les coffrets de distribution électrique rapportés dans une paroi quelconque.

Elle concerne plus particulièrement une méthode de montage d'un coffret pour appareillages électriques comprenant un fond et des moyens de fixation d'appareillages électriques définissant au moins un plan de montage.

### ARRIERE-PLAN TECHNOLOGIQUE

Actuellement, les coffrets de distribution sont des coffrets monoblocs qui peuvent contenir des fusibles, des disjoncteurs ou encore des interrupteurs.

Ils présentent des tailles spécifiques fixes.

En particulier, de tels coffrets à encastrer sont standardisés à une profondeur définie fixe et ne peuvent donc être installés que dans un espace dont la profondeur est égale ou supérieure à cette profondeur de coffret.

Ainsi, dans le cas où la profondeur du logement accueillant le coffret de distribution serait supérieure à la profondeur de ce dernier, l'espace disponible entre le fond du coffret et le fond de la paroi est perdu alors qu'il pourrait être avantageusement utilisé pour augmenter l'espace de câblage des appareillages électriques rapportés dans ledit coffret. En effet, aujourd'hui, cet espace de câblage est limité à l'espace situé derrière le plan de montage desdits appareillages dans ledit coffret.

On connaît également du document FR 2 088 897 une boîte de sol comportant un socle à l'intérieur duquel est rapporté un cadre coulissant. Le socle de la boîte de sol est destiné à être noyé dans la dalle porteuse et le cadre est ajusté par coulissement en hauteur par rapport au socle pour adapter la profondeur de la boîte de sol à l'épaisseur du plancher que l'on veut atteindre une fois que la chape et le revêtement d'isolation sont rapportés sur la dalle porteuse.

Enfin, on connaît du document US 6 369 322, une rehausse qui se présente sous la forme d'un cadre avec des parois qui présentent une certaine flexibilité. Cette rehausse est engagée dans un socle déjà encastré dans une paroi sur laquelle est ajouté un doublage, pour rehausser la face avant du socle qui, du fait de la surépaisseur du doublage, se trouve en retrait de la face externe de celui-ci. Plus particulièrement, les parois latérales de la rehausse sont légèrement rapprochées pour être insérées dans le socle et glissent sur les parois latérales du socle immobile jusqu'à ce que le rebord avant de la rehausse vienne en appui contre la face externe du doublage. Dans cette position, la rehausse est solidarisée au socle au moyen de vis.

### OBJET DE L'INVENTION

Par rapport à l'état de la technique, la présente invention propose une nouvelle méthode de montage d'un coffret modulable pour appareillages électriques qui permet de modifier la profondeur du coffret pour l'adapter à la profondeur de l'espace disponible dans la paroi de montage.

Plus particulièrement, on propose selon l'invention, une méthode de montage d'un coffret pour appareillages électriques selon la revendication 1.

Ainsi, grâce à l'invention, après la fixation du cadre sur la paroi d'encastrement (par la mise en appui de celui-ci sur ladite paroi), l'installateur peut pousser le fond du socle pour adapter lui-même la profondeur du coffret à la profondeur du logement d'encastrement prévu dans la paroi de manière à disposer d'un espace maximum pour câbler les divers appareillages électriques rapportés dans ledit coffret.

Une caractéristique avantageuse de l'invention, est énoncée dans la revendication 2.

Ainsi, les seules formes et dimensions du cadre et du socle permettent de créer une liaison glissière rigide entre le cadre et le socle. La mise en oeuvre de l'invention est alors de conception aisée et est peu coûteuse à réaliser.

Avantageusement, on bloque en position le fond du socle dans le trou d'encastrement par rapport audit plan de montage du coffret.

Ainsi, lorsque le cadre et le socle sont encastrés dans ladite paroi, l'installateur peut les assembler solidement afin qu'ils ne puissent plus se translater l'un par rapport à l'autre.

Selon un mode de réalisation de l'invention on perce et on visse chacune des ailes du cadre avec une paroi latérale du socle.

Selon un autre mode de réalisation de l'invention, on utilise au moins une vis quart-de-tour crantée apte à prendre appui sur le cadre et à bloquer le socle pour les solidariser l'un à l'autre.

Le cadre du coffret selon l'invention peut être réalisé d'une seule pièce par moulage d'une matière plastique.

Ainsi, le cadre sort d'un moule sans nécessiter aucune modification supplémentaire afin d'être prêt à l'emploi. En outre, ce type de procédé permet de concevoir sur le cadre des structures fonctionnelles pouvant, par exemple, simplifier le montage du coffret.

Avantageusement, selon le mode de réalisation précité de l'invention, le socle comportant sur une face intérieure tournée vers les ailes du cadre au moins une série de crans et le cadre comportant intérieurement au moins un logement ouvert par une fenêtre sur lesdits crans du socle on dispose chaque vis quart-de-tour dans chaque logement du cadre, puis en faisant pivoter chaque vis quart-de-tour on engage les crans de chaque vis quart-de-tour dans les crans correspondant du socle au travers de la fenêtre du logement du cadre.

Ainsi, il est possible de fixer précisément le socle par rapport au coffret en position selon l'axe orthogonal au plan de montage. En effet, la vis quart-de-tour présente des crans aptes à être positionnés à différentes hauteurs sur la série de crans du socle. Une telle fixation est par ailleurs réversible, ce qui permet un démontage aisé du cadre par rapport au socle en ne dégradant aucune de ces deux pièces.

En outre, selon ce mode de réalisation, la vis quart-de-tour crantée et ledit rebord périphérique du cadre forment des moyens de maintien du coffret dans le trou d'encastrement de ladite paroi.

Selon un autre mode de réalisation du coffret conforme à l'invention, chacune des deux ailes du cadre est réalisée d'une seule pièce par extrusion d'une matière plastique.

Ainsi, il est possible de diminuer le coût et le temps de fabrication du coffret par rapport à un procédé de moulage.

En outre, selon cet autre mode de réalisation, On rapporte deux embouts aux extrémités des ailes du cadre pour former ledit cadre.

Préférentiellement, on découpe les deux embouts du cadre selon une strie de plus faible résistance de sorte qu'une pis montés dans ladite paroi, le bord libre desdits embouts affleure la surface des gaines de câbles électriques en provenance du réseau électrique et le rebord desdits embouts prend appui sur la face extérieure de ladite paroi.

Ainsi, compte tenu du passage des câbles d'alimentation électrique dans le trou d'encastrement de ladite paroi, il est possible de fermer presque hermétiquement le coffret de telle sorte qu'il comporte le plus faible nombre de lumières possible, accroissant ainsi par exemple sa résistance à la poussière.

Avantageusement, lesdites ailes du cadre et des parois latérales du socle comportent des moyens d'arrêt en position haute et basse du socle par rapport au cadre selon l'axe orthogonal au plan de montage.

Ainsi, le socle reste fixé au cadre notamment lorsque l'installateur pousse le socle vers le fond du trou d'encastrement. En effet, lorsque ce trou d'encastrement est plus profond que l'épaisseur maximale que peut présenter le coffret, ces moyens d'arrêt permettent au socle de ne pas se désolidariser du cadre. Ces moyens d'arrêt permettent donc un montage plus aisé du coffret dans la paroi.

Avantageusement alors, on met en butée l'une contre l'autre des nervures disposées, d'une part, le long d'au moins une face extérieure d'une aile du cadre, et, d'autre part, le long d'au moins une face intérieure d'une paroi latérale du socle, lesdites nervures étant adaptées à venir en butée l'une contre l'autre.

Selon une autre caractéristique avantageuse de l'invention, préalablement à l'assemblage du cadre et du socle, on monte des platines transversales sur les ailes du cadre, puis on fixe des appareillages électriques sur lesdites platines au moyen de systèmes de fixation compris sur les appareillages électriques.

Ainsi, il est possible de disposer dans le coffret toutes sortes d'appareillages électriques adaptés aux normes en vigueur dans le pays de destination du coffret. Il est par exemple possible de disposer un disjoncteur sur une première platine et des fusibles sur une seconde platine transversale de forme différente. Il est par ailleurs aussi possible d'intervertir la position de ces platines dans le coffret.

### DESCRIPTION DETAILLEE D'UN EXEMPLE DE REALISATION

La description qui va suivre en regard des dessins annexés donnés à titre d'exemples non limitatifs, fera bien comprendre en quoi consiste l'invention et comment elle peut être réalisée.

Sur les dessins annexés :
- la figure 1 est une vue éclatée en perspective d'un premier mode de réalisation d'un coffret pour appareillages électriques selon l'invention ;
- la figure 2 est une vue en perspective semi assemblée du coffret de la figure 1 ;
- les figures 3A et 3B sont des vues partielles en coupe transversale du coffret de la figure 1 en position basse et en position haute ;
- la figure 4 est une vue en perspective de détail du coffret de la figure 1 ;
- la figure 5 est une vue éclatée en perspective d'un deuxième mode de réalisation d'un coffret pour appareillages électriques selon l'invention ;
- la figure 6 est une vue en perspective du coffret de la figure 5 encastré dans une paroi ;
- la figure 7 est une vue schématique de détail d'un moyen de fixation appartenant au coffret de la figure 5 ; et
- la figure 8 est une vue schématique éclatée de détail du coffret de la figure 5.

En préliminaire, on notera que les éléments identiques ou similaires des différents modes de réalisation représentés sur les différentes figures seront, dans la mesure du possible, référencés par les mêmes signes de références et ne seront pas décrits à chaque fois.

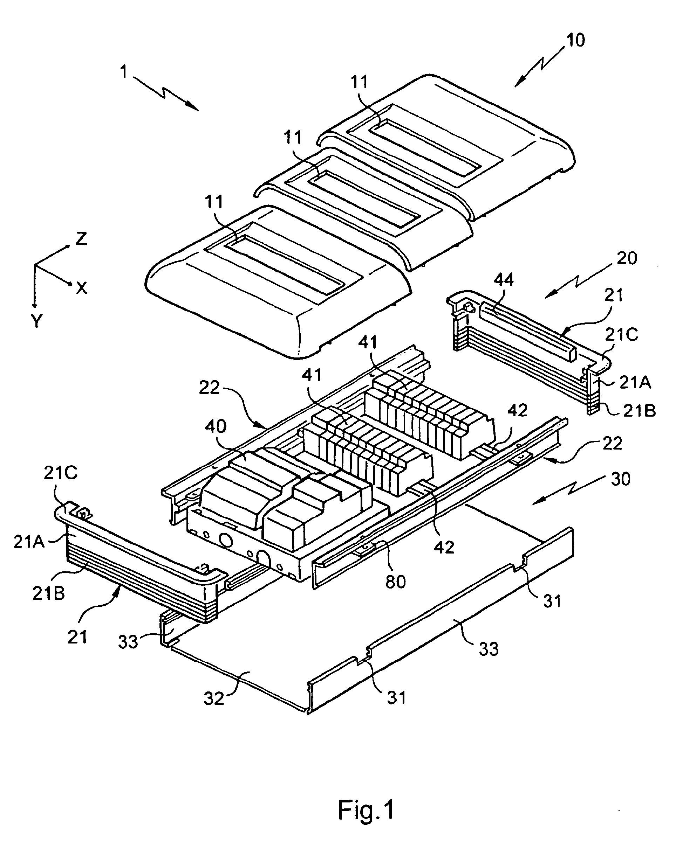

Sur les figures 1 à 8, on a représenté deux modes de réalisation avantageux d'un coffret 1 pour appareillages électriques 40,41.

Le coffret 1 est un coffret de distribution logeant et protégeant différents appareillages électriques tels que des fusibles 41, des disjoncteurs 40 ou encore des interrupteurs.

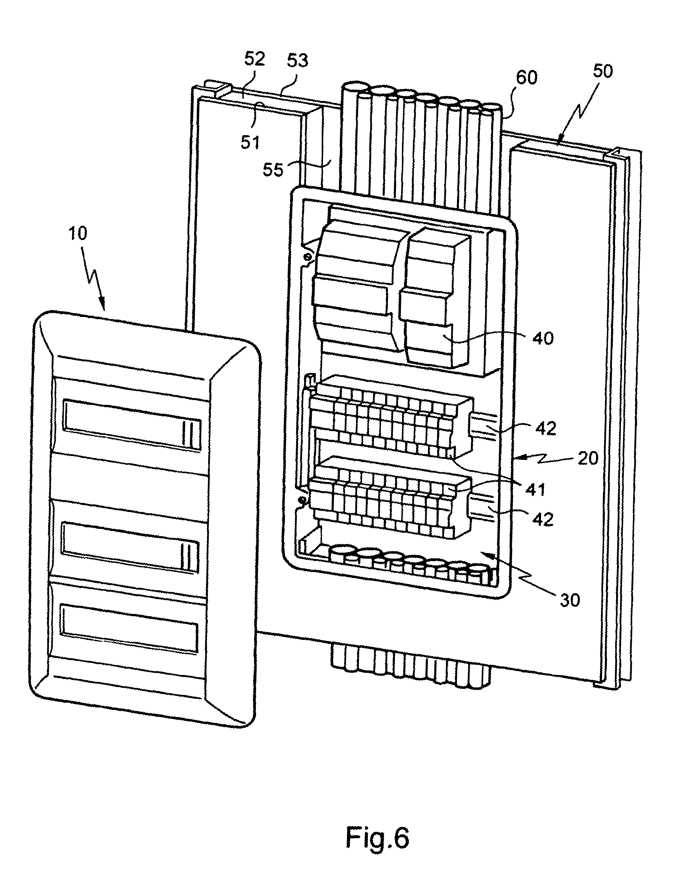

Comme le montre en particulier la figure 6, un tel coffret 1 est généralement destiné à être positionné verticalement dans un trou d'encastrement 55 réalisé dans une paroi 50, ici une paroi d'isolation d'un mur porteur. La paroi 50 est une paroi de type panneau de gypse. Une telle paroi présente deux plaques, une plaque avant 51 et une plaque arrière 53, qui enserrent un matériau isolant 52, par exemple de la laine de verre. Le trou d'encastrement 55 est réalisé dans la plaque avant 51 et dans le matériau isolant 52, la plaque arrière 53 est quant à elle laissée intacte. Les dimensions de ce trou d'encastrement 55 en longueur et en largeur sont déterminées en fonction de la taille du coffret 1, sa profondeur est déterminée par l'épaisseur de la paroi d'isolation.

Le coffret 1 comprend, outre un capot enjoliveur 10 destiné à recouvrir les appareillages électriques 40,41 montés dans ledit coffret 1, deux ensembles indépendants, à savoir un cadre 20 et un socle 30.

Le capot enjoliveur 10 est ici réalisé en plusieurs parties et est encliqueté sur le cadre 20. Chaque partie du capot enjoliveur 10 comprend une ouverture 11 permettant à un utilisateur d'accéder aux faces de commande des appareillages électriques 40,41.

Le cadre 20, constitué d'une ou plusieurs pièces selon le mode de réalisation, comporte deux ailes 22 entre lesquelles s'étendent des moyens de fixation 42,43 destinés à recevoir les appareillages électriques 40,41.

Ici, ces moyens de fixation 42,43 sont des platines transversales pouvant présenter des profils différents selon le type d'appareillage électrique 40,41 destiné à y être fixé.

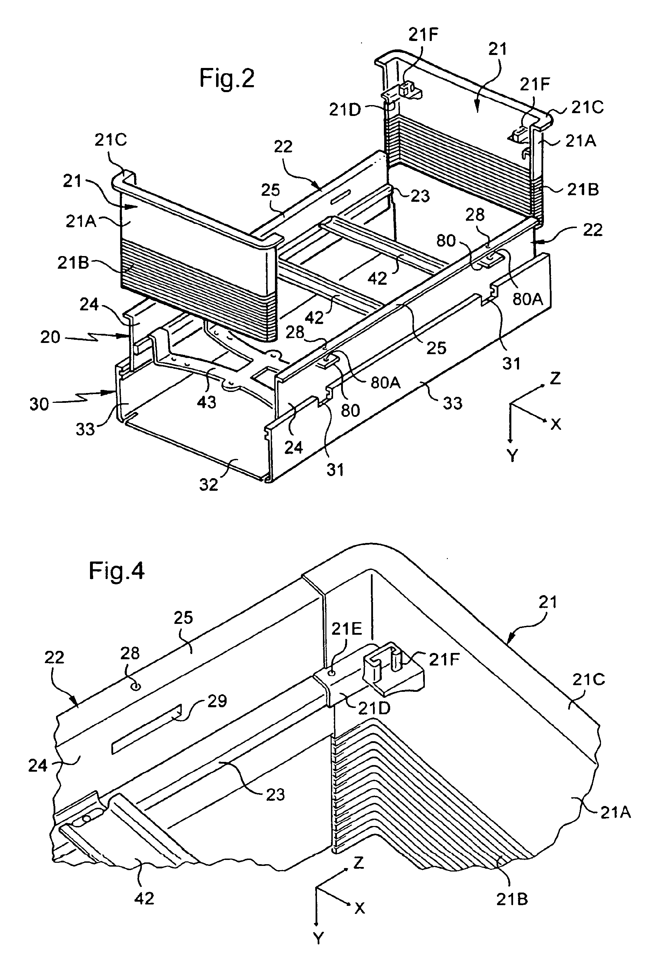

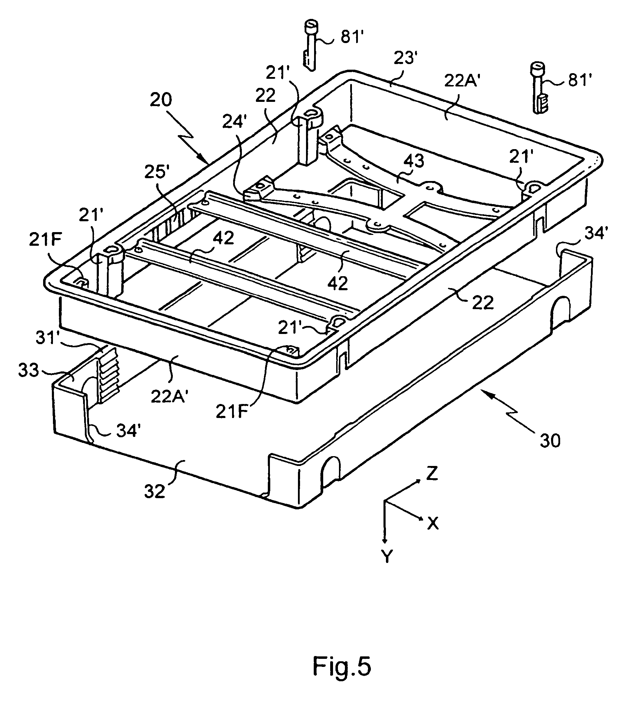

Comme le montrent plus précisément les figures 2 et 5, les platines transversales 42 présentent une forme de rail de section en U disposé orthogonalement aux ailes 22 du cadre 20, et dont les extrémités sont solidarisées de manière démontable à chacune desdites ailes 22 au moyen de vis de fixation. Ces rails sont particulièrement adaptés à recevoir des fusibles 41. Ils définissent en outre un premier plan de montage.

La platine 43 présente quant à elle une forme différente. Ses extrémités sont aussi solidarisées de manière démontable aux ailes 22 du cadre 20 mais le plan de montage que cette platine 43 définit est déporté vers le fond du coffret 1 de manière à pouvoir accueillir des appareillages électriques de dimensions plus importantes, tels qu'un disjoncteur principal 40. Cette platine 43 comprend deux rails courbés s'étendant entre les deux ailes 22 du cadre 20 liés longitudinalement l'un à l'autre. Cette structure lui permet alors de maintenir plus solidement le disjoncteur principal 40 dans le coffret 1.

Le socle 30, de section en U, présente un fond 32 et des parois latérales 33, il est destiné à fermer l'arrière du coffret 1. Le socle 30 est formé d'une seule pièce par extrusion ou par moulage d'une matière plastique.

Selon une caractéristique particulièrement avantageuse de l'invention, le fond 32 du socle 30 peut prendre différentes positions par rapport à chacun des plans de montage défini par les moyens de fixation 42,43. De cette manière, avantageusement, la profondeur du coffret 1 peut être adaptée à la profondeur du trou d'encastrement 55 de façon à libérer un maximum d'espace de câblage derrière les appareillages électriques 40,41 rapportés sur les platines 42,43.

Pour cela, ici, les parois latérales 33 du socle 30 et les ailes 22 du cadre 20 sont agencées de manière à pouvoir coulisser les unes sur les autres selon l'axe Y orthogonal aux plans de montage. Ainsi, ici, le fond 32 du socle 30 peut prendre en continu une infinité de positions relatives par rapport auxdits plans de montage.

Bien entendu on peut prévoir, selon une variante de réalisation du coffret, que le cadre et le socle soient agencés de manière à faire prendre au fond du socle seulement un nombre fini de positions relatives par rapport au plan de montage des appareillages électriques dans le coffret.

Sur les figures 1 à 4, on a représenté un premier mode de réalisation du coffret 1 dans lequel le cadre 20 est réalisé en quatre pièces 21,22, dont les deux ailes 22 formées chacune d'une seule pièce par extrusion d'une matière plastique.

Le socle 30 présente plus spécifiquement une forme de U avec ses deux parois latérales 33, parallèles l'une par rapport à l'autre, qui bordent les deux côtés longitudinaux du fond 32. Il est également réalisé par extrusion d'une matière plastique.

Quant au cadre 20, il est principalement composé de quatre poutres indépendantes, les deux ailes 22 et deux embouts 21. Les deux ailes 22 portent les moyens de fixation 42,43 des appareillages électriques 40,41 et sont destinées à être disposées verticalement dans la paroi 50, selon un axe Z. Les deux embouts 21 sont quant à eux destinés à être rapportés aux extrémités desdites ailes pour former le cadre 20 et donc à être disposés horizontalement dans la paroi 50 selon l'axe X.

Comme le montre la figure 2, les deux ailes 22 présentent un profil en forme de L.

Le petit côté du L, appelé rebord 25, forme une partie de l'ensemble du rebord périphérique du cadre 20 destiné à prendre appui contre la face extérieure de la paroi 50. Ce rebord 25 est par ailleurs percé de deux ouvertures 28 permettant l'insertion de vis de fixation 26 à la paroi.

L'autre côté du L, appelé glissière 24, porte sur sa face extérieure, du côté opposé au rebord 25, une nervure 27 longitudinale dont l'extrémité prend appui sur la face intérieure d'une paroi latérale 33 du socle 30.

Le socle 30 porte quant à lui sur la face intérieure de chacune de ses paroi latérales 33 deux nervures 34A,34B longitudinales dont les extrémités prennent appui sur la face extérieure d'une glissière 24.

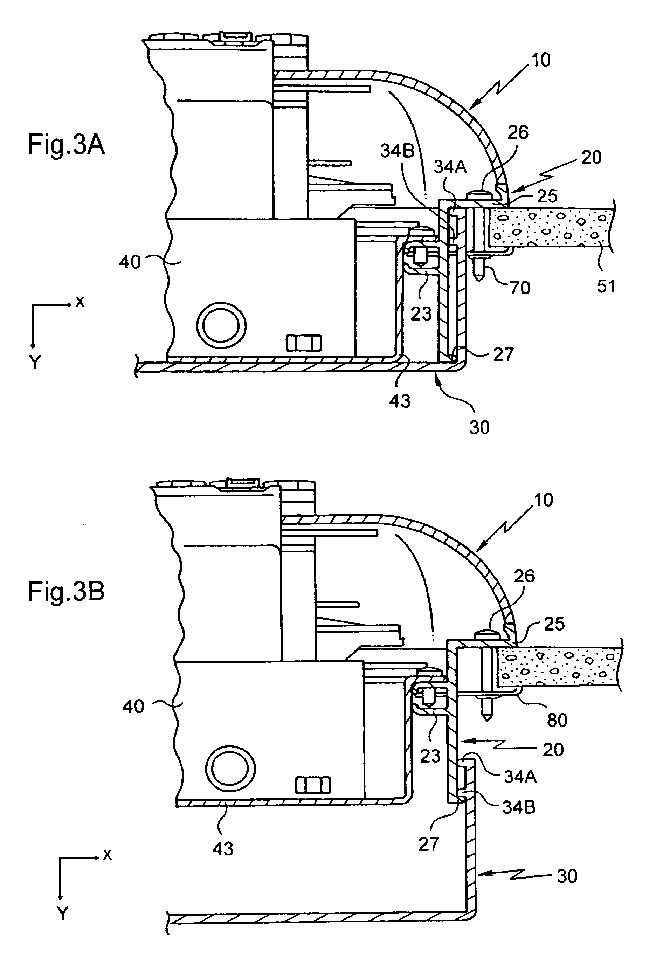

Ces nervures 27,34A,34B forment la liaison glissière entre le cadre 20 et le socle 30 (voir figures 3A,3B).

Pour bloquer en position relative le cadre 20 et le socle 30, il est prévu ici des vis (non représentées) qui sont vissées au travers des épaisseurs des glissières 24 du cadre 20 et des parois latérales 33 du socle 30 juxtaposées.

Par ailleurs, chaque glissière 24 du cadre 20 porte sur sa face intérieure des moyens d'assemblage des platines 42,43. Comme le montrent les figures 3A et 3B, ces moyens d'assemblage comprennent un rail longitudinal 23 s'étendant sur toute la longueur des faces intérieures des glissières 24 selon l'axe Z. Ces rails présentent une section carrée apte à être transpercée de vis de fixation des platines 42,43.

Comme le montre la figure 4, chaque glissière 24 comprend deux fentes 29 disposées à l'aplomb des ouvertures 28. Ces fentes 29 permettent l'insertion de pattes 80 pouvant alors faire saillie sur les faces extérieures des glissières 24. Ces pattes 80 sont percées de trous filetés 80A qui, lorsque les pattes 80 sont disposées en saillie des ailes 22, se trouvent en vis-à-vis des ouvertures 28 du rebord 25.

Les parois latérales 33 du socle 10 possèdent par ailleurs des encoches 31 permettant le passage des pattes 80 du cadre 20 quelque soit la position de ce dernier par rapport au socle 30.

Ces pattes 80 sont destinées à être insérées derrière la plaque avant 51 de la paroi d'isolation 50 pour fixer le cadre 20 associé au socle 30 sur ladite paroi d'isolation 50 en prenant en sandwich ladite plaque avant 51 entre chaque patte 80 et le rebord 25. L'ensemble est solidement maintenu en position au moyen des vis de fixation 26 engagées au travers des ouvertures 28 du rebord 25 et vissées dans les trous filetés 80A des pattes 80.

Avantageusement, on notera que chaque nervure 27 des glissières 24 du cadre 20 est apte à prendre appui sur une des nervures 34B du socle 30 pour former un moyen d'arrêt du socle 30 en position basse par rapport au cadre 20, position dans laquelle le fond 32 dudit socle 30 est le plus éloigné du ou des plans de montage définis par les platines 42,43 (voir figure 3B).

Les deux embouts 21 du cadre 20 sont quant à eux des poutres en U dont les deux extrémités sont destinées à recouvrir les extrémités des ailes 22. Chaque embout 21 comporte également un rebord 21C faisant partie du rebord périphérique du cadre 20 destiné à prendre appui contre la face extérieure de la paroi 50. La paroi de chaque embout 21 présente quant à elle, à partir du rebord 21C, une première partie 21A plane dont la hauteur, selon l'axe Y, est sensiblement égale à la hauteur des ailes 22, puis, une deuxième partie sécable 21 B formant la partie basse de l'embout destiné à prendre appui sur les gaines 60.

Cette deuxième partie sécable 21 B présente avantageusement des stries qui sont des zones amincies de moindre résistance. Ces stries sont disposées selon l'axe X avec un intervalle régulier entre chaque strie.

La hauteur de cette deuxième partie 21 B est initialement environ égale à celle de la première partie. Sa hauteur peut être ajustée en brisant cette deuxième partie sécable 21 B le long d'une strie.

Avantageusement, comme le montre plus précisément la figure 4, les embouts 21 portent intérieurement deux poutrelles 21 D de section en L et d'axe Z destinées à s'ajuster sur les rails longitudinaux 23 des ailes 22 du cadre 20 pour centrer et fixer les embouts 21 à chaque extrémité desdites ailes 22. A cet effet, chaque poutrelle 21 D est percée d'un trou 21 E permettant l'introduction aisée d'une vis pour la fixation de ces poutrelles 21 D auxdits rails longitudinaux 23.

Enfin, les embouts 21 comprennent des logements 21 F aptes à coopérer avec des moyens d'encliquetage disposés sur la face arrière du capot enjoliveur 10, autorisant ainsi la fixation de ce dernier sur le cadre 20.

Préférentiellement les deux embouts 21 sont réalisés d'une seule pièce par moulage d'une matière plastique.

En outre, un bornier 44 est fixé à un des deux embouts 21 pour le raccordement électrique des appareillages électriques 40,41 sur le réseau électrique.

Comme le montrent les figures 3A et 3B, pour l'assemblage du coffret 1 et son insertion dans la paroi 50, il est tout d'abord nécessaire de monter les platines 42,43 sur les ailes 22 de sorte que l'ensemble de ces pièces forme un ensemble rigide. On notera d'ailleurs que les platines 42,43 qui s'étendent transversalement entre les ailes 22 participent à la rigidification du cadre 20. L'étape suivante consiste à fixer les appareillages électriques 40,41 sur les platines 42,43 au moyen de systèmes de fixation compris sur les appareillages électriques et bien connus de l'homme du métier.

L'installateur fait ensuite coulisser le socle 30 le long des ailes 22 du cadre 20 selon l'axe Z, de sorte que les nervures 34A et 34B du socle 30 coulissent longitudinalement entre les rebords 25 et les nervures 27 des ailes 22.

Puis, en fonction du diamètre des gaines 60 des câbles électriques en provenance du réseau électrique et en fonction de la profondeur du trou d'encastrement 55 réalisé dans la paroi 50, l'installateur découpe les embouts 21 du cadre 20 selon une strie de faible résistance de sorte qu'une fois montés dans la paroi 50, le bord libre de la deuxième partie sécable 21 B des embouts 21 affleure à la surface des gaines 60 et le rebord 21C des embouts 21 prend appui sur la plaque avant 51 de la paroi 50.

Il dispose alors les embouts 21 ajustables en hauteur aux extrémités des ailes 22 de manière à fermer le cadre 20.

L'ensemble formé par le cadre 20 et le socle 30 est alors disposé dans le trou d'encastrement 55 de la paroi 50 de telle sorte que le rebord périphérique 25,21C du cadre 20 prend appui contre la face extérieure de la paroi avant 51 de la paroi 50.

Les pattes 80 sont alors insérées au travers des fentes 29 derrière la plaque avant 51 de sorte que les ouvertures 28 et les trous filetés 80A soient disposés de part et d'autre de cette plaque. Puis, le cadre 20 est fixé à la paroi 50 au moyen des vis de fixation 26. Pour cela, ces vis de fixation 26 prennent appui sur le rebord 25 des ailes 22, passent au travers des ouvertures 28 et de la plaque avant 51 et sont vissées dans les trous filetés 80A, prenant ainsi la plaque avant 51 de la paroi 50 en sandwich.

Une fois l'ensemble formé par le cadre 20 et le socle 30 fixé à la paroi 50, l'installateur peut pousser manuellement le fond 32 du socle 30 contre la plaque arrière 53 de la paroi 50 de manière à pouvoir disposer d'un espace maximum pour câbler les appareillages électriques 40,41.

Avantageusement, afin de fixer le socle 30 sur le cadre 20, l'installateur perce et visse chacune des ailes 22 avec une paroi latérale 33 du socle 30.

Enfin, l'installateur câble les appareillages électriques avec les câbles électriques tirés dans les gaines 60.

L'installateur encliquette enfin le capot enjoliveur 10 sur le cadre 20, achevant ainsi l'installation et le câblage du coffret 1.

Sur les figures 5 à 8, on a représenté un deuxième mode de réalisation du coffret dans lequel le cadre 20 et le socle 30 sont chacun réalisés d'une seule pièce par moulage d'une matière plastique.

Selon ce mode de réalisation, le socle 30, formé d'une seule pièce par moulage, comporte quatre parois latérales 33 et une paroi de fond 32. Deux de ses parois latérales, celles destinées à être positionnées en haut et en bas du coffret 1, comportent une ouverture 34' destinée au passage des gaines 60 d'amenée des câbles électriques dans ledit coffret 1.

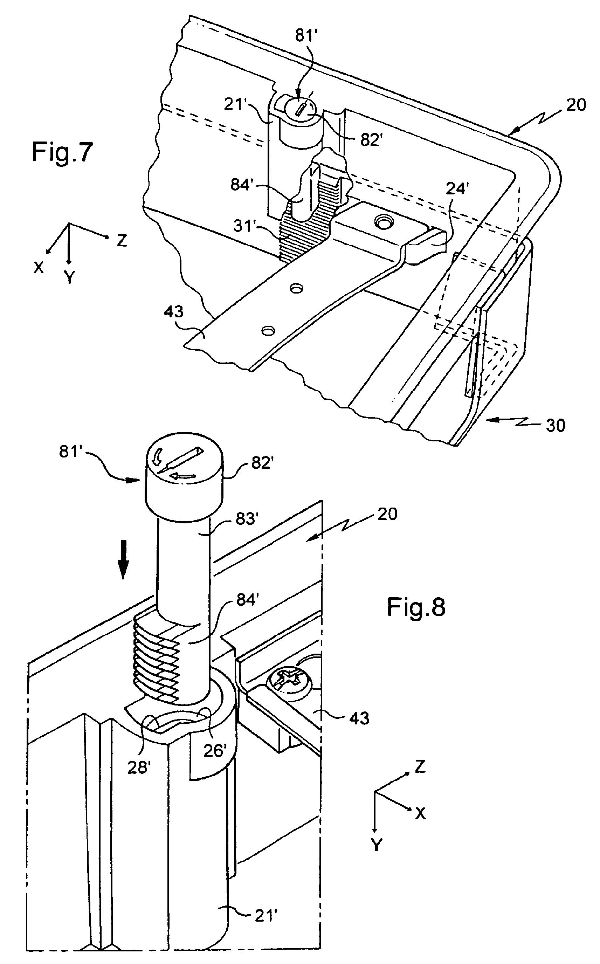

Par ailleurs, comme le montre plus particulièrement la figure 7, les deux autres parois latérales 33 qui bordent les côtés longitudinaux du fond 32 comportent chacune sur leur face intérieure deux séries de crans appelées crémaillères 31'. Ces crans répartis sur toute la hauteur des parois latérales 33 du socle 30 sont tournés vers le côté intérieur dudit socle 30 et s'étendent le long de ladite paroi. Ils sont en outre chanfreinés sur leur face avant tournée du côté du capot enjoliveur 10, de sorte qu'ils présentent un profil triangulaire.

Selon ce même mode de réalisation, le cadre 20, réalisé d'une seule pièce, comprend deux ailes 22 longitudinales et deux parois d'extrémité haute et basse 22A'. Il dispose d'un rebord périphérique 23' adapté à prendre appui sur la face extérieure de la paroi 50. Sur chacune des faces intérieures de ses ailes 22 sont prévus, d'une part, des excroissances 24' permettant la fixation de la platine 43, et, d'autre part, un rail longitudinal 25' permettant le montage d'une ou plusieurs platines transversales 42.

Le cadre 20 comporte ici également des moyens d'encliquetage aptes à coopérer avec ceux du capot enjoliveur 10.

Le cadre 20 comporte par ailleurs avantageusement quatre logements 21' disposés sur la face intérieure de ses ailes 22. Ces quatre logements 21' s'étendent selon la hauteur desdites ailes 22 et sont aptes à accueillir des vis quart-de-tour crantées 81' coopérant avec les crémaillères 31' afin de solidariser le socle 30 au cadre 20.

Plus particulièrement, les vis quart-de-tour crantées 81' portent une tête de manoeuvre 82' et un corps cylindrique 83' qui porte, à son extrémité libre opposée à la tête de manoeuvre 82', un panneton 84' pourvu de crans 81A' chanfreinés aptes à coopérer à différentes hauteurs avec ceux de la crémaillère 31'.

Ces crans 81A' présentent une forme identique aux crans de la crémaillère 31' à la différence près qu'ils sont chanfreinés sur leur face arrière. Ils sont ainsi aptes à s'engager et à coopérer avec les crans des crémaillères 31'.

En outre, comme le montre la figure 8, les logements 21' ont la forme d'un conduit globalement cylindrique pourvu d'une rainure 28' destinée à permettre le passage du panneton 84'. Ce conduit présente, sur sa face avant, une embouchure de faible hauteur comprenant une section d'engagement, puis, sur la hauteur restante, un rétrécissement brutal pourvu d'une fenêtre 27' disposée en vis-à-vis de la crémaillère 31' et permettant aux crans 81A' de la vis quart-de-tour 81' d'accéder à la crémaillère 31'. Ce rétrécissement brutal forme un décrochement présentant une surface d'appui 26' pour la tête de manoeuvre 82' de la vis quart-de-tour 81'.

Le coffret 1 étant composé d'un nombre réduit de pièces, son montage est simple et rapide.

L'installateur dispose en effet directement le cadre 20 dans le socle 30 puis il maintient l'ensemble solidaire pour l'engager dans le trou d'encastrement 55 réalisé dans la paroi 50 de telle manière que le rebord périphérique 23' du cadre 20 prend appui sur la face extérieure de la paroi 50. Il pousse alors manuellement le fond 32 du socle 30 pour que celui-ci vienne se placer contre le fond du trou d'encastrement 55.

Afin d'assembler solidement le cadre 20 avec le socle 30, c'est-à-dire de bloquer en position le socle 30 par rapport au cadre 20, l'installateur utilise les vis quart-de-tour 81'. Pour cela, il dispose les vis quart-de-tour 81' dans les logements 21' du cadre 20. Faisant pivoter les vis quart-de-tour 81', il engage les crans 81A' de ces vis dans les crans des crémaillères 31' disposées en vis-à-vis des fenêtres 27'. Le nombre de crans de la crémaillère définit le nombre de positions que peut prendre le socle 30 par rapport au cadre 20. Le grand nombre de crans de la crémaillère 31' permet alors de positionner le socle 30 par rapport au cadre 20 précisément à la hauteur voulue.

Le socle 30 et le cadre 20 forment ainsi un ensemble rigide d'une profondeur correspondant sensiblement à la profondeur de la paroi 50.

Selon une caractéristique avantageuse de l'invention, le diamètre du logement 21' au niveau de la fenêtre 27' est tel que, lorsque la vis quart-de-tour 81' pivote d'un quart de tour, elle appuie fortement sur la crémaillère 31'.

De la même manière que dans le mode de réalisation précédemment décrit, l'installateur peut ensuite câbler le coffret 1 puis disposer le capot enjoliveur 10 sur le cadre 20, achevant ainsi le montage du coffret 1.

La présente invention n'est nullement limitée aux modes de réalisation décrits et représentés, mais l'homme du métier saura y apporter toute variante conforme à son esprit.

## Revendications

1. Méthode de montage d'un coffret (1) pour appareillages électriques (40,41) dans un trou d'encastrement (55), ledit coffret (1) comprenant un socle (30) pourvu d'un fond (32), un cadre (20) comportant un rebord périphérique (25,21C ;23'), le socle (30) et le cadre (20) étant adaptés à coulisser l'un par rapport à l'autre, et des moyens de fixation (42,43) d'appareillages électriques (40,41) solidarisés à deux ailes (22) du cadre (20) et définissant au moins un plan de montage desdits appareillages électriques (40,41), **caractérisée en ce qu'**elle comprend les étapes suivantes:
- on assemble à coulissement le cadre (20) et le socle (30),
- on engage l'ensemble formé par le cadre (20) et le socle (30) à l'intérieur du trou d'encastrement (55) de telle sorte que le rebord périphérique (25,21C ;23') du cadre (20) prend appui contre la face extérieure de ladite paroi (50), et
- on pousse manuellement le fond (32) du socle (30) à l'intérieur du trou d'encastrement (55) pour que celui-ci vienne se placer contre le fond dudit trou d'encastrement et s'écarte dudit plan de montage défini par lesdits moyens de fixation du coffret (1).

2. Méthode selon la revendication 1, **caractérisée en ce que**, pour assembler le cadre (20) et le socle (30), on dispose le cadre (20) dans le socle (30) de sorte que deux parois latérales (33) du socle (30) coulissent sur les ailes (22) du cadre (20) selon un axe orthogonal au plan de montage.

3. Méthode selon l'une des revendications 1 et 2, **caractérisée en ce qu'**on bloque en position le fond du socle (30) dans le trou d'encastrement (55) par rapport audit plan de montage du coffret (1).

4. Méthode selon les revendications 2 et 3, **caractérisée en ce qu'**on perce et on visse chacune des ailes (22) du cadre (20) avec une paroi latérale (33) du socle (30).

5. Méthode selon la revendication 3, **caractérisée en ce qu'**on utilise au moins une vis quart-de-tour (81') crantée apte à prendre appui sur le cadre (20) et à bloquer le socle (30) pour les solidariser l'un à l'autre.

6. Méthode selon la revendication 5, **caractérisée en ce que** le socle (30) comportant sur une face intérieure tournée vers les ailes (22) du cadre (20), au moins une série de crans (31'), et le cadre (20) comportant intérieurement au moins un logement (21') ouvert par une fenêtre sur lesdits crans (31') du socle (30), on dispose chaque vis quart-de-tour (81') dans chaque logement (21') du cadre (20), puis en faisant pivoter chaque vis quart-de-tour (81'), on engage les crans (81A') de chaque vis quart-de-tour (81') dans les crans (31') correspondant du socle (30) au travers de la fenêtre du logement (21') du cadre (20).

7. Méthode selon la revendication 6, **caractérisée en ce qu'**on maintient ledit coffret (1) en place dans le trou d'encastrement (55) de la paroi (50) par l'intermédiaire de chaque vis quart-de-tour (81') crantée et dudit rebord périphérique (23') du cadre (20) qui forment des moyens de maintien.

8. Méthode selon l'une des revendications 2 à 4, **caractérisée en ce qu'**on rapporte deux embouts (21) aux extrémités des ailes (22) du cadre (20) pour former ledit cadre (20).

9. Méthode selon la revendication 8, **caractérisée en ce qu'**on découpe les deux embouts (21) du cadre (20) selon une strie de plus faible résistance de sorte qu'une fois montés dans ladite paroi (50), le bord libre desdits embouts (21) affleure la surface des gaines (60) de câbles électriques en provenance du réseau électrique et le rebord (21C) desdits embouts (21) prend appui sur la face extérieure de ladite paroi (50).

10. Méthode selon l'une des revendications 2 à 9, **caractérisée en ce que**, lorsque l'on pousse manuellement le fond (32) du socle (30) dans le trou d'encastrement (55), on limite la translation du socle (30) selon l'axe orthogonal audit plan de montage grâce à des moyens d'arrêt (27,34A,34B) prévus sur lesdites ailes (22) du cadre (20) et les parois latérales (33) du socle (30).

11. Méthode selon la revendication 10, **caractérisée en ce qu'**on met en butée l'une contre l'autre des nervures disposées, d'une part, le long d'au moins une face extérieure (24B) d'une aile (22) du cadre (20), et, d'autre part, le long d'au moins une face intérieure d'une paroi latérale (33) du socle (30).

12. Méthode selon l'une des revendications 1 à 11, **caractérisée en ce que**, préalablement à l'assemblage du cadre (20) et du socle (30), on monte des platines (42, 43) transversales sur les ailes (22) du cadre (20), puis on fixe des appareillages électriques (40,41) sur lesdites platines (42, 43) au moyen de systèmes de fixation compris sur les appareillages électriques.

13. Méthode selon la revendication 2, **caractérisée en ce qu'**après avoir engager l'ensemble formé par le cadre (20) et le socle (30) à l'intérieur du trou d'encastrement (55), on insère des pattes (80) pourvues d'un trou fileté (80A) au travers de fentes (29) prévues dans les ailes (22) du cadre (20) de sorte que lesdites pattes (80) font saillie de la face extérieure (24B) des ailes (22) du cadre (20) et s'interposent entre la plaque avant (51) et le matériau d'isolation (52) de la paroi (50), puis on engage des vis au travers d'ouvertures (28) dudit rebord périphérique (25,21C) du cadre (20) en appui contre la face extérieure de la paroi (50) ainsi que de ladite plaque avant (51) de la paroi (50) afin de les visser dans les trous filetés (80A) des pattes (80) pour prendre en sandwich ladite plaque avant (51) de la paroi (50) entre ledit rebord périphérique (25) et lesdites pattes (80).

## Claims

1. A method of mounting a box (1) for electrical equipment (40, 41) in a flush-mounting hole (55), said box (1) comprising a base (30) provided with a bottom (32), a frame (20) having a peripheral rim (25, 21C; 23'), the base (30) and the frame (20) being adapted to slide relative to each other, and fastener means (42, 43) for fastening electrical equipment (40, 41), the fastener means being secured to two side members (22) of the frame (20) and defining at least one mounting plane for said electrical equipment (40, 41), the method being **characterized in that** it comprises the following steps:
slidably assembling the frame (20) and the base (30);
engaging the assembly formed by the frame (20) and the base (30) inside the flush-mounting hole (55) in such a manner that the peripheral rim (25, 21C; 23') of the frame (20) bears against the outside face of said wall (50); and
manually pushing the bottom (32) of the base (30) inside the flush-mounting hole (55) so that it comes into position against the bottom of said flush-mounting hole and moves away from said mounting plane defined by said fastener means of the box (1).

2. A method according to claim 1, **characterized in that** it in order to assemble the frame (20) and the base (30), the frame (20) is placed in the base (30) in such a manner that the two side walls (33) of the base (30) slide on the side members (22) of the frame (20) along an axis orthogonal to the mounting plane.

3. A method according to claim 1 or claim 2, **characterized in that** the bottom of the base (30) is locked in position in the flush-mounting hole (55) relative to said mounting plane of the box (1).

4. A method according to claims 2 and 3, **characterized in that** each of the side members (22) of the frame (20) is drilled and screwed to a side wall (33) of the base (30).

5. A method according to claim 3, **characterized in that** at least one serrated quarter-turn screw (81') is used that is suitable for bearing against the frame (20) and for locking the base (30) so as to secure them to each other.

6. A method according to claim 5, **characterized in that** for the base (30) including at least one series of serrations (31') on an inside face facing towards the side members (22) of the frame (20), and for the frame (20) including at least one housing (21') on its inside, which housing is open via a window to said serrations (31') of the base (30), each quarter-turn screw (81') is placed in each housing (21') of the frame (20), and then by pivoting each quarter-turn screw (81'), the serrations (81A') of each quarter-turn screw (81') are caused to engage in the corresponding serrations (31') of the base (30) through the window in the housing (21') of the frame (20).

7. A method according to claim 6, **characterized in that** said box (1) is held in place in the flush-mounting hole (55) in the wall (50) via each serrated quarter-turn screw (81') and said peripheral rim (23') of the frame (20) that forms holding means.

8. A method according to any one of claims 2 to 4, **characterized in that** two endpieces (21) are fitted to the ends of the side members (22) of the frame (20) to form said frame (20).

9. A method according to claim 8, **characterized in that** the two endpieces (21) of the frame (20) are cut along a line of weakness so that, once mounted in said wall (50), the free edges of said endpieces (21) are flush with the surfaces of the sheaths (60) of electric cables coming from the electricity network, and the rims (21 C) of said endpieces (21) bear against the outside face of said wall (50).

10. A method according to any one of claims 2 to 9, **characterized in that** when the bottom (32) of the base (30) is pushed manually into the flush-mounting hole (55), movement of the base (30) in translation along the axis orthogonal to said mounting plane is limited by stop means (27, 34A, 34B) provided on said side members (22) of the frame (20) and on the side walls (33) of the base (30).

11. A method according to claim 10, **characterized in that** splines disposed firstly along at least one outside face (24B) of a side member (22) of the frame (20) and along at least one inside face of a side wall (33) of the base (30) are put into abutment one against another.

12. A method according to any one of claims 1 to 11, **characterized in that** prior to assembling the frame (20) with the base (30), transverse straps (42, 43) are mounted on the side members (22) of the frame (20), and then electrical equipment (40, 41) is fastened on said straps (42, 43) by means of fastener systems incorporated in the electrical equipment.

13. A method according to claim 2, **characterized in that** after engaging the assembly formed by the frame (20) and the base (30) inside the flush-mounting hole (55), tabs (80) provided with threaded holes (80A) are inserted through slots (29) provided in the side members (22) of the frame (20) in such a manner that said tabs (80) project from the outside faces (24B) of the side members (22) of the frame (20) and become interposed between the front plate (51) and the insulating material (52) of the wall (50), and then screws are engaged through openings (28) in said peripheral rim (25, 21 C) of the frame (20) bearing against the outside face of the wall (50), and against said front plate (51) of the wall (50) so as to screw them into the threaded holes (80A) of the tabs (80) in order to engage said front plate (51) of the wall (50) in a sandwich between said peripheral rim (25) and said tabs (80).

## Patentansprüche

1. Verfahren zum Einbau eines Gehäuses (1) für Elektrogeräte (40, 41) in ein Einbauloch (55), wobei das Gehäuse (1) einen mit einem Boden (32) versehenen Sockel (30), einen Rahmen (20) mit einer Umfangsrandleiste (25, 21C; 23'), wobei der Sockel (30) und der Rahmen (20) geeignet sind, um zueinander zu gleiten, und Befestigungsmittel (42, 43) für Elektrogeräte (40, 41) aufweist, die mit zwei Schenkeln (22) des Rahmens (20) fest verbunden sind und mindestens eine Einbauebene der Elektrogeräte (40, 41) definieren, **dadurch gekennzeichnet, dass** es die folgenden Schritte aufweist:
- der Rahmen (20) und der Sockel (30) werden verschiebbar zusammengebaut,
- die vom Rahmen (20) und vom Sockel (30) gebildete Einheit wird in das Einbauloch (55) derart eingefügt, dass die Umfangsrandleiste (25, 21C; 23') des Rahmens (20) gegen die Außenseite der Wand (50) anliegt, und
- der Boden (32) des Sockels (30) wird von Hand ins Innere des Einbaulochs (55) gedrückt, damit er sich gegen den Boden des Einbaulochs legt und sich von der Einbauebene entfernt, die von den Befestigungsmitteln des Gehäuses (1) definiert wird.

2. Verfahren nach Anspruch 1, **dadurch gekennzeichnet, dass** für den Zusammenbau des Rahmens (20) und des Sockels (30) der Rahmen (20) so im Sockel (30) angeordnet wird, dass zwei Seitenwände (33) des Sockels (30) auf den Schenkeln (22) des Rahmens (20) gemäß einer Achse orthogonal zur Einbauebene gleiten.

3. Verfahren nach einem der Ansprüche 1 und 2, **dadurch gekennzeichnet, dass** der Boden des Sockels (30) im Einbauloch (55) bezüglich der Einbauebene des Gehäuses (1) in Stellung blockiert wird.

4. Verfahren nach den Ansprüchen 2 und 3, **dadurch gekennzeichnet, dass** jeder der Schenkel (22) des Rahmens (20) durchbohrt und mit einer Seitenwand (33) des Sockels (30) verschraubt wird.

5. Verfahren nach Anspruch 3, **dadurch gekennzeichnet, dass** mindestens eine Vierteldrehungs-Rastschraube (81') verwendet wird, die auf dem Rahmen (20) aufliegen und den Sockel (30) blockieren kann, um sie fest miteinander zu verbinden.

6. Verfahren nach Anspruch 5, **dadurch gekennzeichnet, dass**, da der Sockel (30) auf einer zu den Schenkeln (22) des Rahmens (20) weisenden Innenseite mindestens eine Reihe von Rasten (31') aufweist und da der Rahmen (20) innen mindestens eine Aufnahme (21') aufweist, die sich über ein Fenster zu den Rasten (31') des Sockels (30) hin öffnet, jede Vierteldrehungsschraube (81') in jeder Aufnahme (21') des Rahmens (20) angeordnet wird, dann durch Drehen jeder Vierteldrehungsschraube (81') die Rasten (81A') jeder Vierteldrehungsschraube (81') in die entsprechenden Rasten (31') des Sockels (30) durch das Fenster der Aufnahme (21') des Rahmens (20) eingeführt werden.

7. Verfahren nach Anspruch 6, **dadurch gekennzeichnet, dass** das Gehäuse (1) im Einbauloch (55) der Wand (50) über jede Vierteldrehungs-Rastschraube (81') und die Umfangsrandleiste (23') des Rahmens (20) in Stellung gehalten wird, die Haltemittel bilden.

8. Verfahren nach einem der Ansprüche 2 bis 4, **dadurch gekennzeichnet, dass** zwei Endstücke (21) an die Enden der Schenkel (22) des Rahmens (20) angesetzt werden, um den Rahmen (20) zu bilden.

9. Verfahren nach Anspruch 8, **dadurch gekennzeichnet, dass** die zwei Endstücke (21) des Rahmens (20) gemäß einer Riefe geringeren Widerstands geschnitten werden, damit, wenn sie in die Wand (50) eingesetzt sind, der freie Rand der Endstücke (21) bündig mit der Fläche der Hüllen (60) von Elektrokabeln ist, die vom Stromnetz kommen, und die Randleiste (21C) der Endstücke (21) auf der Außenseite der Wand (50) aufliegt.

10. Verfahren nach einem der Ansprüche 2 bis 9, **dadurch gekennzeichnet, dass**, wenn der Boden (32) des Sockels (30) von Hand in das Einbauloch (55) gedrückt wird, die Translationsbewegung des Sockels (30) gemäß der Achse orthogonal zur Einbauebene mit Hilfe von Haltemitteln (27, 34A, 34B) begrenzt wird, die auf den Schenkeln (22) des Rahmens (20) und den Seitenwänden (33) des Sockels (30) vorgesehen sind.

11. Verfahren nach Anspruch 10, **dadurch gekennzeichnet, dass** Rippen, die einerseits entlang mindestens einer Außenseite (24B) eines Schenkels (22) des Rahmens (20) und andererseits entlang mindestens einer Innenseite einer Seitenwand (33) des Sockels (30) angeordnet sind, in Anschlag gegeneinander gebracht werden.

12. Verfahren nach einem der Ansprüche 1 bis 11, **dadurch gekennzeichnet, dass** vor dem Zusammenbau des Rahmens (20) und des Sockels (30) Querplatinen (42, 43) auf die Schenkel (22) des Rahmens (20) montiert werden, und dann Elektrogeräte (40, 41) auf die Platinen (42, 43) mittels auf den Elektrogeräten enthaltenen Befestigungssystemen befestigt werden.

13. Verfahren nach Anspruch 2, **dadurch gekennzeichnet, dass** nach dem Einfügen der vom Rahmen (20) und dem Sockel (30) gebildeten Einheit ins Innere des Einbaulochs (55) Laschen (80), die mit einem Gewindeloch (80A) versehen sind, durch Schlitze (29) eingeführt werden, die in den Schenkeln (22) des Rahmens (20) vorgesehen sind, so dass die Laschen (80) von der Außenseite (24B) der Schenkel (22) des Rahmens (20) vorstehen und sich zwischen die vordere Platte (51) und das Isoliermaterial (52) der Wand (50) schieben, dann Schrauben durch Öffnungen (28) der Umfangsrandleiste (25, 21C) des Rahmens (20) in Auflage gegen die Außenseite der Wand (50) sowie der vorderen Platte (51) der Wand (50) eingefügt werden, um sie in die Gewindelöcher (80A) der Laschen (80) zu schrauben, um die vordere Platte (51) der Wand (50) zwischen der Umfangsrandleiste (25) und den Laschen (80) einzuklemmen.
